# EUROPÄISCHE PATENTSCHRIFT

(11) **EP 3 860 802 B1**
(45) Veröffentlichungstag und Bekanntmachung des Hinweises auf die Patenterteilung: **26.06.2024**
(21) Anmeldenummer: 19772716.7
(22) Anmeldetag: 19.09.2019
(51) Int. Cl.: B23P 6/02, B23P 19/04, B25B 1/22, B25B 5/14, B25H 5/00, B25H 1/00

(54) **HANDHABUNGSVORRICHTUNG UND VERFAHREN ZUR WARTUNG EINES KOLBENS MIT EINEM AN DEM KOLBEN ÜBER EINEN KOLBENBOLZEN BEFESTIGTEN PLEUELKOPF**
HANDLING APPARATUS AND METHOD FOR MAINTENANCE OF A PISTON HAVING A SMALL END FIXED TO THE PISTON BY A PISTON PIN
DISPOSITIF DE MANIPULATION ET PROCÉDÉ DESTINÉ À L'ENTRETIEN D'UN PISTON COMPRENANT UNE TÊTE DE BIELLE FIXÉE AU PISTON PAR L'INTERMÉDIAIRE D'UN AXE DE PISTON

(30) Priorität: 04.10.2018 DE 102018124456
(43) Veröffentlichungstag der Anmeldung: 11.08.2021
(73) Patentinhaber: MAN Energy Solutions SE, 86153 Augsburg (DE)
(72) Erfinder: KOTTRE, Ewald, 86154 Augsburg (DE); STEGMAYR, Mario, 86450 Altenmünster (DE)
(86) Internationale Anmeldenummer: PCT/EP2019/075100
(87) Internationale Veröffentlichungsnummer: WO 2020/069874

(56) Entgegenhaltungen:
- WO-A1-87/07198
- CN-A- 106 493 660
- CN-U- 203 875 832
- CN-U- 207 669 267
- CN-U- 207 894 390
- DATABASE WPI Week 198731 Thomson Scientific, London, GB; AN 1987-220206 XP002796130, -& SU 1 274 899 A (GOSNITI AVTOREMONT) 7. Dezember 1986 (1986-12-07)

## Beschreibung

Die Erfindung betrifft eine Handhabungsvorrichtung zur Wartung eines Kolbens mit einem an dem Kolben über einen Kolbenbolzen befestigten Pleuelkopf nach dem Oberbegriff des Anspruchs 1. Sie betrifft weiter ein Verfahren zur Wartung eines Kolbens mit einem an dem Kolben über einen Kolbenbolzen befestigen Pleuelkopf mit einer solchen Handhabungsvorrichtung.

Bei der Wartung von Großbrennkraftmaschinen, wie zum Beispiel Schiffsdieselbrennkraftmaschinen, die über gebaute, aus mehreren Bestandteilen zusammengesetzte Pleuelstangen verfügen, ist es üblich, zur Wartung eines Kolbens einen Kolben mit einem an dem Kolben über einen Kolbenbolzen befestigten Pleuelkopf von der Brennkraftmaschine zu demontieren und anschließend zur Wartung den Kolbenbolzen und den Pleuelkopf vom Kolben zu entfernen sowie ggf. darauffolgend den Kolben in ein Kolbenoberteil und ein Kolbenunterteil zu zerlegen. Die Handhabung eines Kolbens mit einem an dem Kolben über einen Kolbenbolzen befestigten Pleuelkopf erfolgt bislang undefiniert durch Ablage des zu wartenden Kolbens auf einer Palette und durch manuelles Drehen des Kolbens in eine für die unterschiedlichen Wartungsschritte auszuführende Position. Hierbei kann der Kolben, Kolbenbolzen oder auch Pleuelkopf beschädigt werden. Weiterhin ist die Vorgehensweise für Wartungspersonal gefährlich, da sich das Wartungspersonal bei einer solchen Handhabung großer, schwerer Kolben verletzen kann. Es besteht daher Bedarf an einer Handhabungsvorrichtung für Kolben mit einem an dem Kolben über einen Kolbenbolzen befestigten Pleuelkopf, mithilfe derer der Kolben zur Wartung sicher gehandhabt werden kann.

Hiervon ausgehend liegt der vorliegenden Erfindung die Aufgabe zugrunde, eine sichere Handhabungsvorrichtung zur Wartung eines Kolbens mit einem an dem Kolben über einen Kolbenbolzen befestigten Pleuelkopf zu schaffen.

Aus der CN 207 669 267 U ist eine Handhabungsvorrichtung bekannt, die zur Wartung eines Kolbens geeignet ist, mit einem an dem Kolben über einen Kolbenbolzen befestigten Pleuelkopf, mit einem Grundgestell, mit einer gegenüber dem Grundgestell schwenkbaren oder kippbaren Aufnahmeeinrichtung für einen aus einer Brennkraftmaschine ausgebauten Kolben, an welchem über einen Kolbenbolzen ein Pleuelkopf befestigt ist, mit einem Aktuator zum Schwenken oder Kippen der Aufnahmeeinrichtung gegenüber dem Grundgestell, mit einer Feststelleinrichtung, über welche die Aufnahmeeinrichtung am Grundgestell in unterschiedlichen Schwenkpositionen oder Kipppositionen feststellbar ist.

Diese Aufgabe wird durch eine Handhabungsvorrichtung zur Wartung eines Kolbens mit einem an dem Kolben über einen Kolbenbolzen befestigten Pleuelkopf nach Anspruch 1 gelöst.

Die Handhabungsvorrichtung weist ein Grundgestell auf. Ferner weist die Handhabungsvorrichtung eine gegenüber dem Grundgestell schwenkbare oder kippbare Aufnahmeeinrichtung für einen aus einer Brennkraftmaschine ausgebauten Kolben auf, an welchem über einen Kolbenbolzen ein Pleuelkopf befestigt ist. Ferner weist die Handhabungsvorrichtung einen Aktuator zum Schwenken oder Kippen der Aufnahmeeinrichtung gegenüber dem Grundgestell auf. Ferner weist die Handhabungsvorrichtung eine Feststelleinrichtung auf, über welche die Aufnahmeeinrichtung am Grundgestell in unterschiedlichen Schwenkpositionen feststellbar ist.

Die Grundkomponenten der Handhabungsvorrichtung sind das Grundgestell, die Aufnahmeeinrichtung, der Aktuator sowie die Feststelleinrichtung. Über die Handhabungsvorrichtung kann ein zu wartender Kolben mit dem an dem Kolben über den Kolbenbolzen befestigten Pleuelkopf sicher und zuverlässig gehandhabt und hierzu in definierte Wartungspositionen überführt werden. Es besteht keine Gefahr, dass der Kolben, Kolbenbolzen oder Pleuelkopf bei der Wartung beschädigt wird oder sich Wartungspersonal bei der Wartung verletzen kann.

Nach der Erfindung weist das Grundgestell Standfüße, Querträger, Längsträger und Lagerstreben auf, wobei die Querträger und Längsträger in einer horizontal verlaufenden Ebene liegen, wobei die Standfüße gegenüber dieser Ebene in einer ersten Richtung nach unten und die Lagerstreben gegenüber dieser Ebene in einer zweiten Richtung nach oben wegstehen, und wobei die Aufnahmeeinrichtung an den Lagerstreben schwenkbar oder kippbar gelagert ist. Ein derartiges Grundgestell ist besonders bevorzugt. Die Querträger, Längsträger, Standfüße und Lagerstreben sind vorzugsweise als Steckprofile ausgeführt und ineinandergesteckt. Über die Höhe der Standfüße kann die Arbeitshöhe an der Handhabungsvorrichtung eingestellt werden. Über die Aufnahmeeinrichtung, die an den Lagerstreben schwenkbar oder kippbar ist, kann der Kolben in definierte Wartungspositionen geschwenkt oder gekippt werden.

Nach der Erfindung weist die Aufnahmeeinrichtung eine Grundplatte auf, die über Schwenkarme an den Lagerstreben angreift, wobei die Aufnahmeeinrichtung weiterhin an der Grundplatte angreifende Spindeln und eine an den Spindeln angreifende Klemmbrücke aufweist, wobei ein Kolben, an welchem über einen Kolbenbolzen ein Pleuelkopf befestigt ist, auf der Grundplatte abstellbar ist und über die Spindeln und die Klemmbrücke zwischen Grundplatte und Klemmbrücke klemmbar ist. Eine derartige Aufnahmeeinrichtung, bei welcher der handzuhabende Kolben zwischen der Grundplatte und der Klemmbrücke geklemmt ist, ist besonders bevorzugt, um den Kolben in den unterschiedlichen Schwenkstellungen oder Kippstellungen sicher zu halten und eine Beschädigung desselben sowie eine Verletzungsgefahr für Wartungspersonal auszuschließen.

Nach einer vorteilhaften Weiterbildung der Erfindung umfasst die Handhabungsvorrichtung einen mit der Grundplatte der Aufnahmeeinrichtung zusammenwirkenden Adapter, der in einer definierten Schwenkposition oder Kippposition der Aufnahmeeinrichtung an der Grundplatte positionierbar ist, um bei demontiertem Kolbenbolzen den Pleuelkopf im Kolben zu halten. Über den Adapter kann bei demontiertem Kolbenbolzen der Pleuelkopf vor einem Herausfallen aus dem Kolben gesichert werden. Dies erlaubt eine sichere Handhabung von Kolben und Pleuelkopf bei demontiertem Kolbenbolzen.

Nach einer vorteilhaften Weiterbildung der Erfindung umfasst der Aktuator ein über ein Handrad manuell betätigbares, selbsthemmendes Getriebe, welches die Aufnahmeeinrichtung in jeder beliebigen Schwenkposition oder Kippposition selbsthemmend hält. Der Aktuator erlaubt eine sichere Verlagerung der Aufnahmeeinrichtung relativ zum Grundgestell in verschiedene Schwenkpositionen oder Kipppositionen. Dadurch, dass der Aktuator der Handhabungseinrichtung ein selbsthemmendes Getriebe umfasst, besteht keine Gefahr, dass sich bei Loslassen des Handrads die Aufnahmeeinrichtung undefiniert bzw. selbsttätig relativ zum Grundgestell verlagert. Auch hierdurch wird die Sicherheit erhöht.

Nach einer vorteilhaften Weiterbildung der Erfindung umfasst die Feststelleinrichtung einen Rastbolzen, wobei die Aufnahmeeinrichtung mit Hilfe des Aktuators gegenüber dem Grundgestell ausschließlich bei gelöstem Rastbolzen schwenkbar oder kippbar ist. In definierten Schwenkpositionen oder Kipppositionen sichert der Rastbolzen der Feststelleinrichtung die Aufnahmeeinrichtung am Grundgestell. Auch hierdurch wird die Sicherheit bei der Handhabung des Kolbens, Kolbenbolzens sowie Pleuelkopfs erhöht.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, an Hand der Zeichnung näher erläutert. Dabei zeigt:
- Fig. 1:: eine Seitenansicht einer erfindungsgemäßen Handhabungsvorrichtung zusammen mit einem zu wartenden Kolben, mit einem an dem Kolben über einen Kolbenbolzen befestigen Pleuelkopf in einem ersten Zustand der Handhabungsvorrichtung;
- Fig. 2:: eine gegenüber Fig. 1 um 90° gedrehte Seitenansicht der Fig. 1;
- Fig. 3:: die Seitenansicht der Fig. 2 in einem zweiten Zustand der Handhabungsvorrichtung;
- Fig. 4:: das Detail IV der Fig. 3;
- Fig. 5:: eine perspektivische Ansicht der Handhabungsvorrichtung in einem dritten Zustand der Handhabungsvorrichtung;
- Fig. 6:: die Seitenansicht der Fig. 1 in dem dritten Zustand der Handhabungsvorrichtung bei demontiertem Pleuelkopf;
- Fig. 7:: eine Draufsicht auf Fig. 6 ohne Pleuelkopf;
- Fig. 8:: die Seitenansicht der Fig. 2, 3 in dem ersten Zustand der Handhabungsvorrichtung bei zerlegtem Kolben.

Die Erfindung betrifft eine Handhabungsvorrichtung, die bei der Wartung eines Kolbens mit einem an dem Kolben über einen Kolbenbolzen befestigten Pleuelkopf zum Einsatz kommt, sowie ein Verfahren zur Wartung eines solchen Kolbens unter Verwendung der erfindungsgemäßen Handhabungsvorrichtung. Bei dem zu wartenden und über die Handhabungsvorrichtung handzuhabenden Kolben handelt es sich um einen Kolben einer Großbrennkraftmaschine, wie zum Beispiel einer Schiffsdieselbrennkraftmaschine. Ein derartiger Kolben ist typischerweise als gebauter Kolben aus einem Kolbenunterteil und einem Kolbenoberteil ausgeführt. Ein solcher Kolben ist über eine gebaute Pleuelstange an einer Kurbelwelle montiert, wobei die Pleuelstange aus einem Pleuelkopf, einem Pleuelstangenkörper sowie einem Pleuellager ausgebildet ist. Der Pleuelkopf dient der Anbindung der Pleuelstange an den Kolben. Das Pleuellager dient der Anbindung der Pleuelstange an die Kurbelwelle. Zwischen Pleuelkopf und Pleuellager erstreckt sich die Pleuelstange.

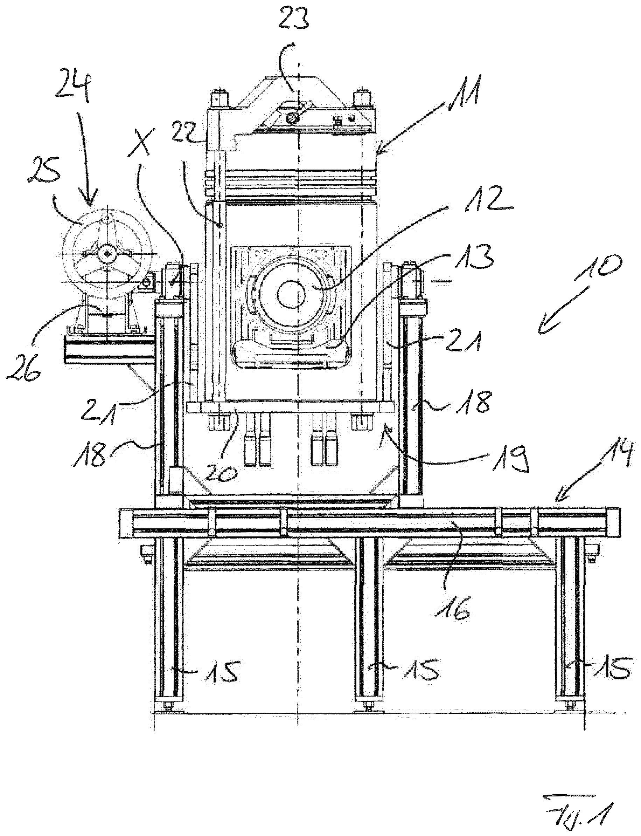

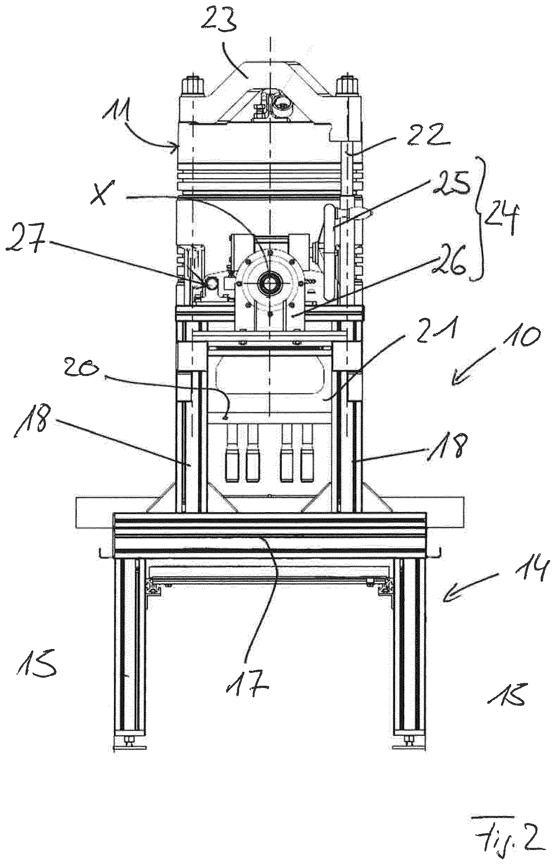

Fig. 1 und 2 zeigen unterschiedliche Seitenansichten einer erfindungsgemäßen Handhabungsvorrichtung 10 zur Wartung eines Kolbens, an welchem über einen Kolbenbolzen ein Pleuelkopf befestigt ist, und zwar zusammen mit einem von der Handhabungsvorrichtung handzuhabenden Kolben 11, an dem über einen Kolbenbolzen 12 ein Pleuelkopf 13 montiert ist. Wie bereits ausgeführt, handelt es sich bei diesem Kolben 11 um einen Kolben einer Großbrennkraftmaschine, wie zum Beispiel einer Schiffsdieselbrennkraftmaschine.

Die Handhabungsvorrichtung 10 verfügt über ein Grundgestell 14. Das Grundgestell 14 verfügt über Standfüße 15, Längsträger 16, Querträger 17 sowie Lagerstreben 18. Die Längsträger 16 und Querträger 17 verlaufen in einer horizontal verlaufenden Ebene bzw. spannen diese Ebene auf, wobei die Standfüße 15 gegenüber dieser Ebene in einer ersten Richtung nach unten und die Lagerstreben 18 gegenüber dieser Ebene in einer zweiten Richtung nach oben weg stehen. Die Höhe der Standfüße 15 bestimmt den Abstand der durch die Längsträger 16 und Querträger 17 definierten Ebene und damit letztendlich die Arbeitshöhe der Handhabungsvorrichtung 10. Das Grundgestell 10, nämlich die Standfüße 15, die Querträger 16, die Längsträger 17 und die Lagerstreben 18 sind vorzugsweise als Streckprofile ausgebildet, die einfach ineinandergesteckt werden können.

Die Handhabungsvorrichtung 10 verfügt weiterhin über eine Aufnahmeeinrichtung 19 für einen zu wartenden Kolben 11 mit einem an dem Kolben 11 über den Kolbenbolzen 12 montierten Pleuelkopf 13, wobei die Aufnahmeeinrichtung 19 gegenüber dem Grundgestell 14 schwenkbar oder kippbar ist, um so letztendlich den von der Aufnahmeeinrichtung 19 aufgenommenen Kolben 11 zu unterschiedlichen Wartungsschritten in definierte Schwenkpositionen bzw. Kipppositionen zu überführen. Die Aufnahmeeinrichtung 19 verfügt dabei über eine Grundplatte 20. Die Grundplatte 20 der Aufnahmeeinrichtung 19 ist über Schwenkarme 21 an den Lagerstreben 18 des Grundgestells 14 schwenkbar bzw. kippbar gelagert, wobei in Fig. 1 eine Schwenkachse bzw. Kippachse der Aufnahmeeinrichtung 19 relativ zum Grundgestell 14 schematisiert mit X gekennzeichnet ist. Zusätzlich zu der Grundplatte 20 und den Schwenkarmen 21 verfügt die Aufnahmeeinrichtung 19 über an der Grundplatte 20 angreifende Spindeln 22 sowie über einen an den Spindeln 22 angreifende Klemmbrücke 23. Ein Kolben 11, der auf der Grundplatte 10 der Aufnahmeeinrichtung 19 positioniert ist, und an welchem über den Kolbenbolzen 12 der Pleuelkopf 13 montiert ist, ist zwischen der Grundplatte 20 und der Klemmbrücke 23 im Bereich der Aufnahmeeinrichtung 19 klemmbar, insbesondere durch Anziehen der Spindeln 22.

Die Handhabungsvorrichtung 10 verfügt weiterhin über einen Aktuator 24, der dem Schwenken oder Kippen der Aufnahmeeinrichtung 19 gegenüber dem Grundgestell 14 dient. Der Aktuator 24 verfügt dabei im gezeigten, bevorzugten Ausführungsbeispiel über ein Handrad 25 sowie über ein selbsthemmendes Getriebe 26. Durch Betätigung des Handrads 25 kann die Aufnahmeeinrichtung 19 relativ zum Grundgestell 14 manuell gekippt bzw. geschwenkt werden, wobei, wie oben ausgeführt, zwischen das Handrad 25 und die Schwenkachse 21 das selbsthemmende Getriebe 26 geschaltet ist. Dann, wenn eine an der Handhabungsvorrichtung arbeitende Person das Handrad 25 loslässt, ist die relative Schwenkposition bzw. Kippposition der Aufnahmeeinrichtung 19 relativ zum Grundgestell 14 über das selbsthemmende Getriebe 26 selbsthemmend gesichert. Eine ungewollten Verlagerung der Aufnahmeeinrichtung 19 bzw. des auf der Aufnahmeeinrichtung 19 aufgenommenen Kolbens 11 relativ zum Grundgestell 14 wird so verhindert.

Neben dem Grundgestell 11, der Aufnahmeeinrichtung 19 sowie dem Aktuator 24 verfügt die Handhabungsvorrichtung 10 weiterhin über eine Feststelleinrichtung 27. Über die Feststelleinrichtung 27, die im gezeigten Ausführungsbeispiel als Rastbolzen ausgeführt ist bzw. einen Rastbolzen umfasst, ist die Aufnahmeeinrichtung 19 am Grundgestell 14 in unterschiedlichen Schwenkpositionen oder Kipppositionen feststellbar bzw. arretierbar.

Die Aufnahmeeinrichtung 19 bzw. ein auf der Aufnahmeeinrichtung 19 geklemmter Kolben 11 ist nur dann mithilfe des Aktuators 24 gegenüber dem Grundgestell 14 schwenkbar oder kippbar, wenn der Rastbolzen bzw. die Feststelleinrichtung 27 gelöst bzw. entriegelt ist. Bei verriegelter Feststelleinrichtung 27 hingegen kann die Aufnahmeeinrichtung 19 nicht relativ zum Grundgestell 11 gekippt bzw. geschwenkt werden.

Fig. 1 und 2 zeigen die Handhabungsvorrichtung 10 in einer ersten Schwenkposition bzw. Kippposition der Aufnahmeeinrichtung 19, in welcher die Grundplatte 20 derselben nach unten gerichtet bzw. den Standfüßen 15 des Grundgestells 14 zugewandt ist. In dieser Relativposition der Aufnahmeeinrichtung 19 ist ein von einer Brennkraftmaschine demontierter Kolben 11, an welchem über den Kolbenbolzen 12 der Pleuelkopf 13 befestigt ist, auf der Grundplatte 20 abstellbar und über Klemmbrücke 23 und die Spindeln 22 zwischen Grundplatte 20 und Klemmbrücke 23 klemmbar.

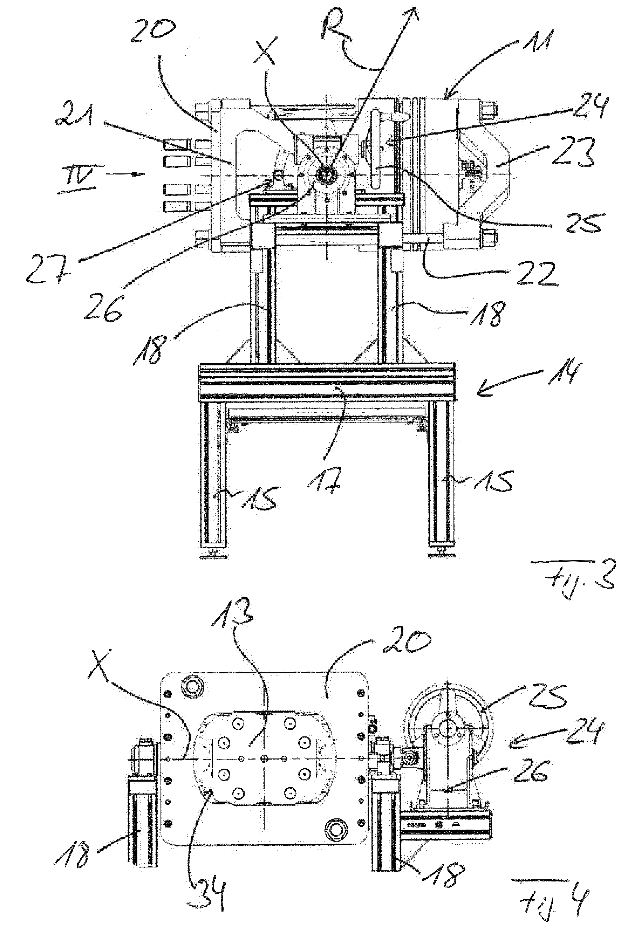

Durch Betätigen des Aktuators 24 kann nach Lösen der Feststelleinrichtung 27 die Aufnahmeeinrichtung 19 zusammen mit dem an der Aufnahmeeinrichtung 19 aufgenommenen und geklemmten Kolben 11 relativ zum Grundgestell 14 verlagert werden, und zwar zum Beispiel in die in Fig. 3 gezeigte Schwenkposition bzw. Kippposition, in welcher gegenüber den Fig. 1 und 2 der Kolben 11 um 90° relativ zum Grundgestell 14 verlagert ist. Ein Pfeil R visualisiert dabei den Bereich, innerhalb dessen sich der Kolben 11 bzw. die Aufnahmeeinrichtung 19 zusammen mit dem Kolben beim Schwenken oder Kippen bewegen kann.

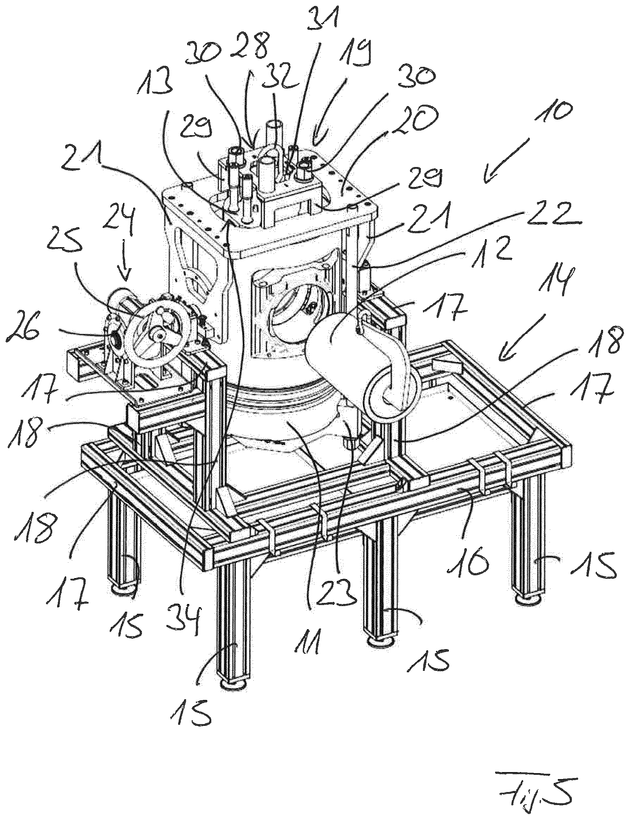

In der Darstellung der Fig. 5 ist die Aufnahmeeinrichtung 19 zusammen mit dem Kolben 11 mithilfe des Aktuators 24 relativ zum Grundgestell 14 weiter gekippt bzw. geschwenkt, und zwar um weitere 90°, derart, dass im Vergleich zur Schwenkposition bzw. Kippposition der Fig. 1 und 2 die Aufnahmeeinrichtung 19 zusammen mit dem an der Aufnahmeeinrichtung 19 geklemmten Kolben 11 auf dem Kopf steht, wobei in allen Relativpositionen bzw. Kipppositionen bzw. Schwenkpositionen der Fig. 1, 2, 3 und 5 die Aufnahmeeinrichtung 19 über die Feststelleinrichtung 27 festgestellt werden kann.

Die erfindungsgemäße Handhabungsvorrichtung 10 verfügt weiterhin über einen mit der Grundplatte 20 der Aufnahmeeinrichtung 19 zusammenwirkenden Adapter 28. Dann, wenn die Aufnahmeeinrichtung 19 die Relativposition bzw. Kippposition oder Schwenkposition der Fig. 5 einnimmt, ist auf der Grundplatte 20 der Adapter 28 positionierbar, der sich über Vorsprünge 29 auf der Grundplatte 20 abstützt. An diesem Adapter 28 ist der Pleuelkopf 13 über Schrauben 30 montierbar.

Dann, wenn in der Schwenkposition bzw. Kippposition der Fig. 5 der Kolbenbolzen 12 vom Kolben 11 demontiert ist, kann sich der Pleuelkopf 13 über den Adapter 28 an der Grundplatte 20 der Aufnahmeeinrichtung 19 abstützen, sodass derselbe dann vor einem Herausfallen aus dem Kolben 11 gesichert ist.

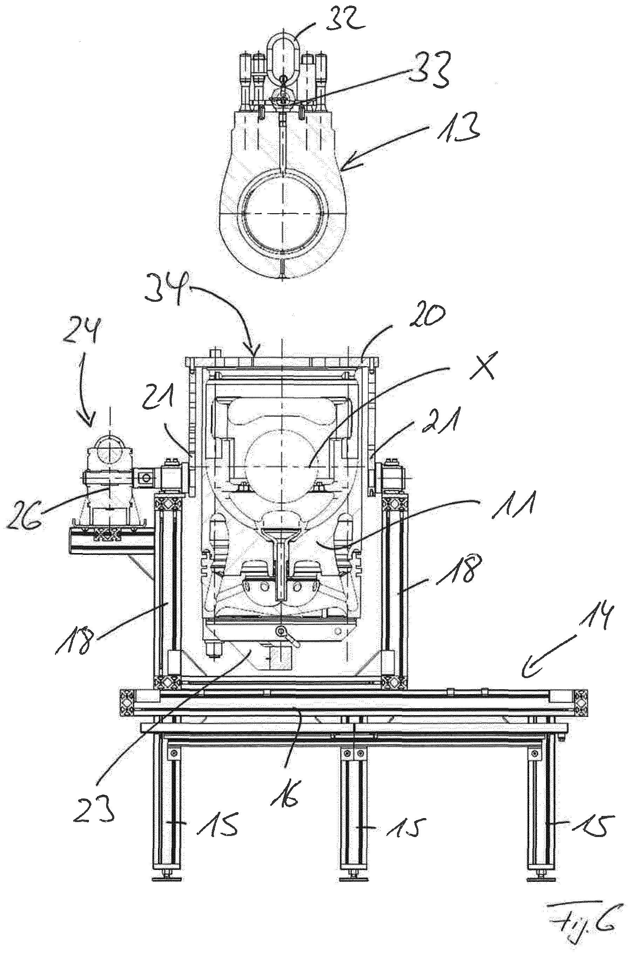

In den Adapter 28 ist eine Öffnung 31 eingebracht, durch die sich ein Befestigungshaken 32 hindurch erstrecken kann, wobei dieser Befestigungshaken 32 mit dem Pleuelkopf 13 über eine Ringschraube 33 verschraubt ist. Dann, wenn die Aufnahmeeinrichtung 19 der Handhabungsvorrichtung 10 die in Fig. 5 gezeigte Relativposition bzw. Kippposition oder Schwenkposition einnimmt, der Kolbenbolzen 12 demontiert ist und sich der Pleuelkopf 13 über den Adapter 28 an der Grundplatte 20 abstützt, kann durch Ziehen am Befestigungshaken 32 der gesamte Pleuelkopf 13 vom Kolben 11 entfernt werden, und zwar über eine in die Grundplatte 20 eingebrachte Ausnehmung 34. Diese Ausnehmung 34 ist am besten in Fig. 4, 5 und 6 sichtbar. Fig. 6 zeigt die Handhabungsvorrichtung 10 zusammen mit dem Kolben 11 in der Relativposition der Aufnahmeeinrichtung 19 gemäß Fig. 5, wobei jedoch in Fig. 6 der Pleuelkopf 13 aus dem Kolben 11 herausgehoben ist.

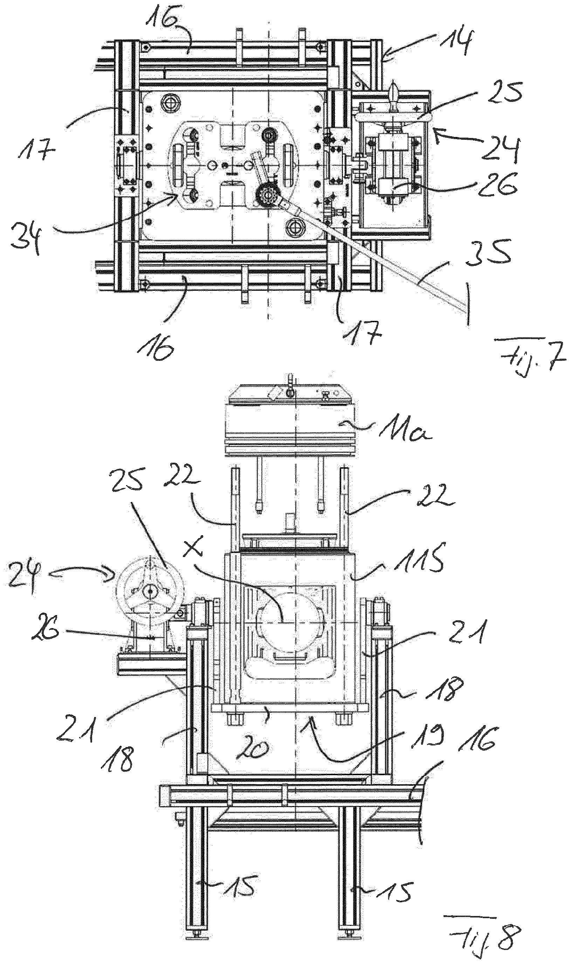

Nach Herausheben des Pleuelkopfs 13 aus dem Kolben 11 (siehe Fig. 6) dient die Ausnehmung 34 der Grundplatte 20 als Zugangsöffnung für ein Werkzeug 35, mithilfe dessen bei einem gebauten Kolben 11 eine Schraubverbindung zwischen einem Kolbenoberteil 11a und einem Kolbenunterteil 11b (siehe Fig. 8) gelöst werden kann.

Nach Lösen der Schraubverbindung von Kolbenoberteil 11a und Kolbenunterteil 11b, nach Überführen der Aufnahmeeinrichtung 19 zurück in die erste Kippstellung bzw. Schwenkstellung der Fig. 1, 2 sowie nach Lösen der Klemmbrücke 23 kann dann gemäß Fig. 8 das Kolbenoberteil 11a vom Kolbenunterteil 11b abgehoben werden.

Um einen Kolben mithilfe der erfindungsgemäßen Handhabungseinrichtung 10 einer Wartung zu unterziehen, wird zunächst der zu wartende Kolben 11 zusammen mit dem am Kolben 11 über ein Kolbenbolzen 12 montierten Pleuelkopf 13 von einem entsprechenden Zylinder einer Brennkraftmaschine entfernt.

Darauffolgend wird der Kolben 11 zusammen mit dem über den Kolbenbolzen 12 am Kolben 11 montierten Pleuelkopf 13 an der Aufnahmeeinrichtung 19 der Handhabungsvorrichtung 10 angeordnet und geklemmt, und zwar in der Schwenkposition bzw. Kippposition der Aufnahmeeinrichtung 19 der Fig. 1 und 2. Hierbei wird der Kolben 11 auf der Grundplatte 20 der Aufnahmeeinrichtung 19 angeordnet und über die Klemmbrücke 23 und die Spindeln 22 zwischen Grundplatte 20 und Klemmbrücke 23 der Aufnahmeeinrichtung 19 geklemmt.

Um nun den Kolben 11 zusammen mit dem am Kolben 11 über den Kolbenbolzen 12 montierten Pleuelkopf 13 zu Wartungsarbeiten in eine definierte Relativposition zu überführen, wird die Aufnahmeeinrichtung 19 mithilfe des Aktuators 24 bei entriegelter Feststelleinrichtung 27 in eine für eine auszuführende Wartung bzw. in eine für einen auszuführenden Wartungsschritt definierte Schwenkposition oder Kippposition überführt.

In der jeweiligen Schwenkposition oder Kippposition wird zur Ausführung des jeweiligen Wartungsschritts die Feststelleinrichtung 27 verriegelt, um so die Aufnahmeeinrichtung 19 in der jeweiligen Schwenkposition oder Kippposition am Grundgestell 14 festzustellen.

Nach Kippen bzw. Schwenken der Aufnahmeeinrichtung 19 von der in Fig. 1 und 2 gezeigten Position in die in Fig. 5 und 6 gezeigte Position und nach Anbringen des Adapters 28 am Pleuelkopf 13 und an der Grundplatte 20 der Aufnahmeeinrichtung 19 ist der Kolbenbolzen 12 entfernbar. Anschließend ist der Pleuelkopf 13 entfernbar, um anschließend im Sinne der Fig. 8 Kolbenoberteil 11a und Kolbenunterteil 11b voneinander zu lösen.

Die hier vorliegende Erfindung ermöglicht eine völlig neuartige und sichere Handhabung eines Kolbens einer Großbrennkraftmaschine, wie zum Beispiel einer Schiffsdieselbrennkraftmaschine bei Ausführung von Wartungsarbeiten am Kolben.

### Bezugszeichenliste

- 10: Handhabungsvorrichtung
- 11: Kolben
- 11a: Kolbenoberteil
- 11b: Kolbenunterteil
- 12: Kolbenbolzen
- 13: Pleuelkopf
- 14: Grundgestell
- 15: Standfuß
- 16: Längsträger
- 17: Querträger
- 18: Lagerstrebe
- 19: Aufnahmeeinrichtung
- 20: Grundplatte
- 21: Schwenkarme
- 22: Spindel
- 23: Klemmbrücke
- 24: Aktuator
- 25: Handrad
- 26: Getriebe
- 27: Feststelleinrichtung
- 28: Adapter
- 29: Vorsprung
- 30: Schraube
- 31: Ausnehmung
- 32: Befestigungshaken
- 33: Ringschraube
- 34: Ausnehmung
- 35: Werkzeug

## Patentansprüche

1. Handhabungsvorrichtung (10) zur Wartung eines Kolbens (11) mit einem an dem Kolben (11) über einen Kolbenbolzen (12) befestigten Pleuelkopf (13),
mit einem Grundgestell (14),
mit einer gegenüber dem Grundgestell (14) schwenkbaren oder kippbaren Aufnahmeeinrichtung (19) für einen aus einer Brennkraftmaschine ausgebauten Kolben (11), an welchem über einen Kolbenbolzen ein Pleuelkopf befestigt,
mit einem Aktuator (24) zum Schwenken oder Kippen der Aufnahmeeinrichtung (19) gegenüber dem Grundgestell (14),
mit einer Feststelleinrichtung (27), über welche die Aufnahmeeinrichtung (19) am Grundgestell (14) in unterschiedlichen Schwenkpositionen oder Kipppositionen feststellbar ist, **dadurch gekennzeichnet, dass** das Grundgestell (14) Standfüße (15), Querträger (17), Längsträger (16) und Lagerstreben (18) aufweist, wobei die Querträger (17) und Längsträger (16) in einer horizontal verlaufenden Ebene liegen, wobei die Standfüße (15) gegenüber dieser Ebene in einer ersten Richtung nach unten und die Lagerstreben (18) gegenüber dieser Ebene in einer zweiten Richtung nach oben wegstehen, und wobei die Aufnahmeeinrichtung (19) an den Lagerstreben (18) schwenkbar oder kippbar gelagert ist und die Aufnahmeeinrichtung (19) eine Grundplatte (20) aufweist, die über Schwenkarme (21) an den Lagerstreben (18) angreift, und dass die Aufnahmeeinrichtung (19) weiterhin an der Grundplatte (20) angreifende Spindeln (22) und eine an den Spindeln (22) angreifende Klemmbrücke (23) aufweist, wobei ein Kolben, an welchem über einen Kolbenbolzen ein Pleuelkopf befestigt ist, auf der Grundplatte (20) abstellbar ist und über die Spindeln (22) und die Klemmbrücke (23) zwischen Grundplatte (20) und Klemmbrücke (23) klemmbar ist.

2. Handhabungsvorrichtung nach Anspruch 1, **dadurch gekennzeichnet, dass** der Aktuator (24) ein über ein Handrad (25) manuell betätigbares, selbsthemmendes Getriebe (26) umfasst, welches die Aufnahmeeinrichtung (19) in jeder beliebigen Schwenkposition oder Kippposition selbsthemmend hält.

3. Handhabungsvorrichtung nach einem der Ansprüche 1 bis 2, **dadurch gekennzeichnet, dass** die Feststelleinrichtung (27) einen Rastbolzen umfasst, wobei die Aufnahmeeinrichtung (19 ) mit Hilfe des Aktuators (24) gegenüber dem Grundgestell (17) ausschließlich bei gelöstem Rastbolzen schwenkbar oder kippbar ist.

4. Handhabungsvorrichtung nach einem der Ansprüche 1 bis 3, **gekennzeichnet durch** einen mit der Grundplatte (20) der Aufnahmeeinrichtung (19) zusammenwirkenden Adapter (28), der in einer definierten Schwenkposition oder Kippposition der Aufnahmeeinrichtung (19) an der Grundplatte (20) positionierbar ist, um bei demontiertem Kolbenbolzen (12) den Pleuelkopf (13) im Kolben (11) zu halten.

5. Handhabungsvorrichtung nach Anspruch 4, **dadurch gekennzeichnet, dass** in die Grundplatte (20) der Aufnahmeeinrichtung (19) eine Ausnehmung (34) eingebracht ist, über die bei demontiertem Kolbenbolzen (12) der vom Adapter (28) gehaltene Pleuelkopf (13) aus dem Kolben (11) entfernbar ist.

6. Handhabungsvorrichtung nach Anspruch 5, **dadurch gekennzeichnet, dass** die Ausnehmung (34) der Grundplatte (19) bei entferntem Pleuelkopf (13) als Zugang für ein Werkzeug (35) zur Zerlegung des Kolbens (11) in einen Kolbenoberteil (11a) und ein Kolbenunterteil (11b) dient.

7. Verfahren zur Wartung eines Kolbens (11) mit einem an dem Kolben über einen Kolbenbolzen (12) befestigen Pleuelkopf (13) mit einer Handhabungsvorrichtung (10) nach einem der Ansprüche 1 bis 6, mit folgenden Schritten:
Entfernen eines zu wartenden Kolbens (11) mit dem am Kolben (11) über den Kolbenbolzen (12) befestigten Pleuelkopf (13) von einer Brennkraftmaschine;
Anordnen und Klemmen des Kolbens (11) mit dem am Kolben über den Kolbenbolzen befestigten Pleuelkopf an der Aufnahmeeinrichtung (19) der Handhabungsvorrichtung, wobei hierzu die Aufnahmeeinrichtung (19) eine definierte Schwenkposition oder Kippposition gegenüber dem Grundgestell (14) einnimmt, die über die Feststelleinrichtung (27) festgestellt ist,
Entriegeln der Feststelleinrichtung (27),
Schwenken oder Kippen der Aufnahmeeinrichtung (19) mit Hilfe des Aktuators (24) in eine für einen ausführenden Wartungsschritt definierte Schwenkposition oder Kippposition,
Verriegeln der Feststelleinrichtung (27) in der jeweiligen Schwenkpositionen oder Kipppositionen und Ausführen des jeweiligen Wartungsschritts.

8. Verfahren nach Anspruch 7, **dadurch gekennzeichnet, dass** in der definierten Schwenkposition oder Kippposition der Aufnahmeeinrichtung (19), in welcher der Kolben mit dem am Kolben über den Kolbenbolzen befestigten Pleuelkopf an der Aufnahmeeinrichtung (19) angeordnet und geklemmt wird, die Grundplatte (20) der Aufnahmeeinrichtung nach unten gerichtet ist oder den Standfüßen (15) des Grundgestells (14) zugewandt ist, und dass in der definierten Schwenkposition oder Kippposition der Aufnahmeeinrichtung (19), in welcher der Kolbenbolzen (12) und der Pleuelkopf (13) vom Kolben (11) demontierbar sind, die Grundplatte (20) der Aufnahmeeinrichtung (19) nach oben gerichtet ist oder von den Standfüßen (15) des Grundgestells (14) abgewandt ist.

## Claims

1. A handling apparatus (10) for the maintenance of a piston (11) having a small end (13) fastened to the piston (11) via a piston pin (12),
having a main frame (14),
having a receiving device (19) that is pivotable or tiltable relative to the main frame (14) for a piston (11) removed from an internal combustion engine, on which via a piston pin a small end is fastened,
having an actuator (24) for pivoting or tilting the receiving device (19) relative to the main frame (14),
having a locking device (27), via which the receiving device (19) can be locked on the main frame (14) in different pivoted positions or tilting positions,
**characterised in that**
the main frame (14) comprises standing feet (15), cross members (17), side members (16) and support struts (18), wherein the cross members (17) and side members (16) lie in a horizontally extending plane,
wherein the standing feet (15) project relative to this plane in a first direction downwards and the support struts (18) relative to this plane, in a second direction upwards,
and wherein the receiving device (19) is pivotably or tiltably mounted on the support struts (18) and the receiving device (19) comprises a baseplate (20) which via pivot arms (21) acts on the support struts (18), and that the receiving device (19) furthermore comprises spindles (22) acting on the baseplate (20) and comprises a clamping bridge (23) acting on the spindles (22),
wherein a piston, to which a small end is fastened via a piston pin, can be placed on the baseplate (20) and can be clamped between baseplate (20) and clamping bridge (23) via the spindles (22) and the clamping bridge (23).

2. The handling apparatus according to Claim 1,
**characterised in that**
the actuator (24) includes a self-locking gear (26) that is manually actuatable via a handwheel (25), which gear holds the receiving device (19) in any desired pivot position or tilting position in a self-locking manner.

3. The handling apparatus according to any one of the Claims 1 to 2,
**characterised in that**
the locking device (27) includes a latching pin, wherein the receiving device (19) is pivotable or tiltable with the help of the actuator (24) relative to the main frame (17) exclusively with released latching pin.

4. The handling apparatus according to any one of the Claims 1 to 3,
**characterised by**
an adapter (28) interacting with the baseplate (20) of the receiving device (19), which adapter can be positioned on the baseplate (20) in a defined pivot position or tilting position of the receiving device (19) in order to hold the small end (13) in the piston (11) with disassembled piston pin (12).

5. The handling apparatus according to Claim 4,
**characterised in that**
in the baseplate (20) of the receiving device (19) a recess (34) is introduced, via which with disassembled piston pin (12) the small end (13) held by the adapter (28) can be removed from the piston (11).

6. The handling apparatus according to Claim 5,
**characterised in that**
the recess (34) of the baseplate (19), with removed small end (13) serves as access for a tool (35) for dismantling the piston (11) into a piston upper part (11a) and a piston lower part (11b).

7. A method for the maintenance of a piston (11) with a small end (13) fastened to the piston via a piston pin (12), having a handling apparatus (10) according to any one of the Claims 1 to 6,
with the following steps:
removing a piston (11) to be maintained with the small end (13) fastened to the piston (11) via the piston pin (12) from an internal combustion engine;
arranging and clamping the piston (11) with the small end fastened to the piston via the piston pin on the receiving device (19) of the handling apparatus, wherein for this purpose the receiving device (19) assumes a defined pivot position or tilting position relative to the main frame (14), which is locked via the locking device (27),
unlocking the locking device (27),
pivoting or tilting the receiving device (19) with the help of the actuator (24) into a pivot position or tilting position defined for a maintenance step to be performed,
locking the locking device (27) in the respective pivot position or tilting position and carrying out the respective maintenance step.

8. The method according to Claim 7,
**characterised in that**
in the defined pivot position or tilting position of the receiving device (19), in which the piston with the small end fastened to the piston via the piston pin is arranged and clamped on the receiving device (19),
the baseplate (20) of the receiving device is directed downwards or facing the standing feet (15) of the main frame (14),
and **in that**
in the defined pivot position or tilting position of the receiving device (19), in which the piston pin (12) and the small end (13) can be disassembled from the piston (11), the baseplate (20) of the receiving device (19) is directed upwards or faces away from the standing feet (15) of the main frame (14).

## Revendications

1. Dispositif de manipulation (10) pour l'entretien d'un piston (11) avec une tête de bielle (13) fixée au piston (11) via un axe de piston (12),
comportant un châssis de base (14),
comportant un dispositif de réception (19) qui peut pivoter ou s'incliner par rapport au châssis de base (14) pour un piston démonté d'un moteur à combustion interne (11), sur lequel une tête de bielle est fixée par l'intermédiaire d'un axe de piston,
comportant un actionneur (24) pour faire pivoter ou incliner le dispositif de réception (19) par rapport au châssis de base (14),
comportant un dispositif de verrouillage (27) via lequel le dispositif de réception (19) peut être verrouillé sur le châssis de base (14) dans différentes positions de pivotement ou de basculement,
**caractérisé en ce que** le châssis de base (14) présente des pieds de support (15), des traverses (17), longerons (16) et jambes de force (18), dans lequel les traverses (17) et les longerons (16) se trouvent dans un plan horizontal, dans lequel les pieds de support (15) pointant vers le bas dans une première direction par rapport à ce plan et les jambes d'appui (18) pointant vers le bas dans une deuxième direction par rapport à ce plan ressortent en haut, et dans lequel le dispositif de réception (19) est monté de manière pivotante ou inclinable sur les jambes de force (18) et le dispositif de réception (19) présente une plaque de base (20) qui vient en prise avec les jambes de force (18) par l'intermédiaire de bras pivotants (21) s'engagent dans et le dispositif de réception (19) comporte en outre des broches (22) venant en prise avec la plaque de base (20) et un pont de serrage (23) venant en prise avec les broches (22), dans lequel un piston, auquel une tête de bielle est fixée via un axe de piston, peut être déposé sur la plaque de base (20) et peut être serré via les broches (22) et le pont de serrage (23) entre la plaque de base (20) et le pont de serrage (23).

2. Dispositif de manutention selon la revendication 1, **caractérisé en ce que** l'actionneur (24) est un engrenage (26) autobloquant pouvant être actionné manuellement via un volant (25), qui maintient le dispositif de réception (19) de manière autobloquante dans toute position de pivotement ou de basculement.

3. Dispositif de manutention selon une des revendications 1 à 2, **caractérisé en ce que** le dispositif de verrouillage (27) comprend un pêne de verrouillage, dans lequel le dispositif de réception (19) ne peut être pivoté ou incliné à l'aide de l'actionneur (24) par rapport au châssis de base (17) que lorsque le boulon de verrouillage est desserré.

4. Dispositif de manutention selon une des revendications 1 à 3, **caractérisé par** un adaptateur (28) qui coopère avec la plaque de base (20) du dispositif de réception (19) qui peut être positionné dans une position de pivotement ou de basculement définie du dispositif de réception (19) sur la plaque de base (20) afin de maintenir la tête de bielle (13) dans le piston (11) lorsque l'axe de piston (12) est retiré.

5. Dispositif de manutention selon la revendication 4, **caractérisé en ce que** la plaque de base (20) du dispositif de réception (19) présente un évidement (34) à travers lequel la tête de bielle (13) maintenue par l'adaptateur (28) peut être retirée du piston (11) lorsque l'axe de piston (12) est supprimé.

6. Dispositif de manutention selon la revendication 5, **caractérisé en ce que** un évidement (34) dans la plaque de base (19) avec la tête de bielle (13) retirée sert d'accès à un outil (35) pour démonter le piston (11) en une partie supérieure du piston (11a) et une partie inférieure du piston (11b).

7. Procédé d'entretien d'un piston (11) comportant une tête de bielle (13) fixée sur le piston via un axe de piston (12) avec un dispositif de manutention (10) selon une des revendications 1 à 6, comportant les étapes suivantes consistant à :
retirer un piston (11) à entretenir avec la tête de bielle (13) fixée au piston (11) via l'axe de piston (12) d'un moteur à combustion interne ;
disposer et serrer le piston (11) sur la tête de bielle fixée au piston par l'intermédiaire de l'axe de piston fixe au dispositif de réception (19) de l'appareil de manutention, dans lequel le dispositif de réception (19) prend à cet effet une position de pivotement ou une position de basculement définie par rapport au châssis de base (14), qui est fixé par le biais du dispositif de verrouillage (27),
déverrouiller le dispositif de verrouillage (27),
pivoter ou basculer le dispositif de réception (19) à l'aide de l'actionneur (24) dans une position de pivotement ou position de basculement définie pour une étape de maintenance en cours d'exécution, verrouiller le dispositif de verrouillage (27) dans les positions respectives de pivotement ou de basculement et exécuter l'étape d'entretien respective.

8. Procédé selon la revendication 7, **caractérisé en ce que** dans la position de pivotement ou position de basculement définie du dispositif de réception (19), dans laquelle le piston avec la tête de bielle fixée au piston via l'axe de piston est disposé et serré sur le dispositif de réception (19), la plaque de base (20) du dispositif de réception est dirigée vers le bas ou les pieds de support (15) du cadre de base (14), et que dans la direction de pivotement ou de basculement définie sur le dispositif de réception (19), dans laquelle l'axe de piston (12) et la tête de bielle (13) peuvent être retirés du piston (11), la plaque de base (20) du dispositif de réception (19) est dirigée vers le haut ou tournée à l'opposé des pieds de support (15) du châssis de base (14).
